# EUROPÄISCHE PATENTANMELDUNG

(11) **EP 3 081 414 A2**
(43) Veröffentlichungstag der Anmeldung: **19.10.2016**
(21) Anmeldenummer: 15194609.2
(22) Anmeldetag: 13.11.2015
(51) Int. Cl.: B60H 3/06, B60H 1/00, B60K 35/00

(54) **VORRICHTUNG UND VERFAHREN ZUR ERHALTUNG UND VERBESSERUNG DER LUFTQUALITÄT IN EINEM INNENRAUM**

(30) Priorität: 16.04.2015 DE 102015004765
(71) Anmelder: Volkswagen Aktiengesellschaft, 38440 Wolfsburg (DE)
(72) Erfinder: Schriever, David, 38176 Wendenburg (DE)

(57) **Zusammenfassung**

Die Erfindung betrifft eine Vorrichtung zur Erhaltung und Verbesserung der Luftqualität in einem Innenraum (3) mit einer Sensorik (7, 8) zum Erfassen der Luftqualität im Innenraum (3) und in einem Außenraum (2) und einer Filtervorrichtung (5) zum Reinigen von Luft. Sie umfasst ferner zumindest einen Ausströmer (4) zum Zuführen gereinigter Luft in den Innenraum (2) und ein Steuergerät (6), durch das anhand der Signale der Sensorik (7, 8) Steuersignale für die Filtervorrichtung (5) erzeugbar sind und Anzeigedaten einer ersten graphischen Darstellung erzeugbar sind. Durch ein freiprogrammierbares Display (9) sind die Anzeigedaten anzeigbar. Die erfindungsgemäße Vorrichtung ist dadurch gekennzeichnet, dass das Display (9) im Bereich des Ausströmers (4) angeordnet ist und die Anzeigedaten Informationen über das Reinigen der Luft umfassen. Die Erfindung betrifft ferner ein Verfahren zur Erhaltung und Verbesserung der Luftqualität in einem Innenraum (3) und ein Kraftfahrzeug (1) mit einer erfindungsgemäßen Vorrichtung.

## Beschreibung

Die vorliegende Erfindung betrifft eine Vorrichtung zur Erhaltung und Verbesserung der Luftqualität in einem Innenraum mit einer Sensorik zum Erfassen der Luftqualität im Innenraum und in einem Außenraum, einer Filtervorrichtung zum Reinigen von Luft und zumindest einem Ausströmer zum Zuführen gereinigter Luft in den Innenraum. Die Vorrichtung umfasst ferner ein Steuergerät, durch das anhand der Signale der Sensorik Steuersignale für die Filtervorrichtung erzeugbar sind und Anzeigedaten einer ersten graphischen Darstellung erzeugbar sind, sowie ein freiprogrammierbares Display, durch das die Anzeigedaten anzeigbar sind. Die Erfindnung betrifft ferner ein Verfahren zur Erhaltung und Verbesserung der Luftqualität in einem Innenraum sowie ein Kraftfahrzeug.

Die Luftqualität in einem Innenraum, insbesondere in einem Kraftfahrzeug, kann sich durch interne oder externe Ursachen verschlechtern. Interne Ursachen können etwa, insbesondere bei unzureichender Lüftung, die Kohlendioxidanreicherung durch das Atmen von Personen in dem Innenraum, eine Schadstoffbelastung durch Zigarettenrauch, Schimmel oder Gefahrgüter im Innenraum sein. Eine externe Ursache kann etwa eine Schadstoffbelastung der Außenluft durch Smog oder Abgase sein.

Die Luftqualität in Innenräumen kann erhalten oder verbessert werden, indem die Innenraumluft kontinuierlich oder bei Bedarf gegen - in der Regel gefilterte - Außenluft ausgetauscht wird. Ist die Außenluft derart verschmutzt, dass dieser Austausch nicht möglich ist, kann Luft oder Sauerstoff aus einem Vorratsbehälter zugeführt werden, der im Falle eines Kraftfahrzeugs mitgeführt werden muss.

Personen in einem Innenraum bemerken oft nicht oder erst spät, dass sich die Qualität der Luft im Innenraum verschlechtert hat. Auch wissen sie oft nicht, wann ein bestimmtes Reinigungsprogramm aktiv ist oder wann sich die Qualität der Luft wieder verbessert hat.

Bei der in der TW M500886 U1 beschriebenen Einrichtung zum Überwachen der Luftqualität in einem Fahrzeug werden mikroskopische Bilder der Teilchen in der Luft aufgenommen und es werden Informationen über die Luftqualität ausgegeben. Beispielsweise können dies Bilder der Partikel in der Luft sein oder ein Graph, der die Entwicklung der Luftqualität zeigt.

Die in der CN102019119 A beschriebene Luftreinigungseinrichtung umfasst zwei Sensoren für die Luftqualität, wobei sich ein Sensor am Eingang und ein Sensor am Ausgang des Filters befindet. Durch einen Vergleich der beiden Messungen kann die Veränderung der Luft durch den Luftfilter visualisiert werden.

Es ist die Aufgabe der vorliegenden Erfindung, den Personen in einem Innenraum Informationen über die Luftqualität und deren Änderung sowie über die Aktivität eines Systems zur Luftreinigung zu geben.

Diese Aufgabe wird erfindungsgemäß durch eine Vorrichtung mit den Merkmalen des Anspruchs 1, ein Verfahren mit den Merkmalen des Anspruchs 13 und ein Kraftfahrzeug mit den Merkmalen des Anspruchs 15 gelöst.

Die erfindungsgemäße Vorrichtung der oben genannten Art ist dadurch gekennzeichnet, dass das Display im Bereich des Ausströmers angeordnet ist und die Anzeigedaten Informationen über das Reinigen der Luft umfassen.

Die Vorrichtung erfasst also mittels der Sensorik den Bedarf, die Luft im Innenraum zu reinigen. Dazu werden Signale für die Filtervorrichtung erzeugt, durch die dem Innenraum gereinigte Luft zuführbar ist. Die Luftqualität kann dabei nach an sich bekannten Methoden erfasst werden, wobei insbesondere die Konzentration von Partikeln einer bestimmten Größe oder eines Stoffs in der Luft bestimmt wird. Beispielsweise kann die chemische Zusammensetzung der Luft, etwa der Sauerstoffgehalt oder der Kohlendioxidgehalt gemessen werden. Schwellenwerte definieren Stufen der Luftqualität und werden durch die von dem Steuergerät erzeugten Steuersignale verarbeitet.

Es erfolgt eine Anzeige auf dem Display, wobei Informationen über das Reinigen der Luft ausgegeben werden. Dies können Informationen zum Zustand der Filtervorrichtung sein oder auch Informationen über die Luftqualität und deren Veränderung durch die Luftreinigung.

Das Display ist in räumlicher Nähe zu dem zumindest einen Ausströmer angeordnet. Dadurch wird vorteilhafterweise die visuell wahrnehmbare Anzeige auf dem Display in einen sinnvollen Kontext mit der einströmenden Luft gesetzt. Insbesondere kann das Reinigen der Luft mittels einer Animation dargestellt werden, wenn ein Reinigungsprozess einsetzt oder eingesetzt hat.

Die ausgegebenen Informationen über das Reinigen der Luft können ferner akustische Ausgabedaten umfassen, die den Personen im Innenraum die Informationen über das Reinigen der Luft noch deutlicher ausgeben.

Der Nutzer kann also gleichzeitig durch das Display visuell Informationen über die Luftreinigung erfassen, während er gleichzeitig zum Beispiel die einströmende Luft auf der Hauf wahrnimmt oder riecht. Die besondere Verbindung des Ausströmers, aus dem die gereinigte Luft austritt, und mit den Anzeigedaten des Displays, das insbesondere zumindest teilweise von der gereinigten Luft umströmt wird, gibt den Personen im Innenraum eine sehr anschauliche Information über die Verbesserung der Luft. Dieser Effekt wird insbesondere dadurch verstärkt, dass die Wahrnehmung der Personen in dem Innenraum über verschiedene Sinne erfolgt: Visuell über das Display mit seiner Anzeige über das Reinigen der Luft, akustisch über das Lüftungsgeräusch, olfaktorisch über das bewusste Riechen der gereinigten Luft sowie haptisch über das Spüren der gereinigten Luft auf der Haut. Diese intensive Wahrnehmung der Luftverbesserung führt zu einem guten Gefühl der Personen und insbesondere bei einer Anwendung in einem Kraftfahrzeug zu einer Konzentrationsverbesserung beim Fahrer.

In einer Ausbildung der Erfindung weist der Ausströmer eine Längsausdehnung auf und das Display ist relativ zu der Längsausdehnung mittig angeordnet. Dies erlaubt vorteilhafterweise eine besonders klar erkennbare Verbindung zwischen dem Ausströmer und dem Display.

In einer Ausführungsform ist die Front des Ausströmers als horizontales Band mit innen angeordneten Lamellen ausgeführt. Das Display ist mittig auf einen Rahmen des Ausströmers gesetzt. Diese symmetrische Anordnung hat vorteilhafterweise eine harmonische Anmutung und sorgt dafür, dass die gereinigte Luft zu beiden Seiten des Displays gleich gut und ungehindert ausströmen kann.

Insbesondere kann das Display schwenkbar sein. Dadurch kann die Richtung, aus der die Anzeige auf dem Display erfasst werden kann, an die Bedürfnisse der Nutzer angepasst werden. Beispielsweise kann in einem Fahrzeug ein Beifahrer das Display so einstellen, dass es auf ihn gerichtet ist, wenn die Informationen über das Reinigen der Luft für ihn besonders relevant scheinen.

Ferner kann durch den Ausströmer dem Innenraum Luft aus einem Luftvorrat zuführbar sein. Dies ist insbesondere dann vorteilhaft, wenn die Reinigung keine ausreichend gute Luftqualität erreichen kann, beispielsweise wegen besonders starker Verschmutzung der zu reinigenden Luft oder wegen Stoffen in der Luft, die nicht durch den Reinigungsprozess erfasst werden.

Bei einer Weiterbildung der Erfindung weist die Filtervorrichtung zumindest zwei Reinigungsprogramme zum Reinigen der Luft auf, die in Abhängigkeit von der erfassten Luftqualität eines der Reinigungsprogramme aktivierbar sind. Die Anzeigedaten der ersten graphischen Darstellung werden angezeigt, wenn ein bestimmtes Reinigungsprogramm aktiviert ist.

Der Nutzer wird so vorteilhafterweise über die Aktivität eines bestimmten Reinigungsprogramms informiert. Dieses Reinigungsprogramm kann insbesondere eine besonders intensive Luftreinigung umfassen: Hat die Qualität der Luft trotz einer kontinuierlichen Filterung und Reinigung derart abgenommen, dass eine Verbesserung angebracht ist, so kann die Reinigung, insbesondere zeitlich vorübergehend, besonders intensiv durchgeführt werden. Hierfür kann bei der Filtervorrichtung ein besonderes Reinigungsprogramm vorgesehen sein. In diesem Fall wird der Nutzer darauf hingewiesen, dass ein starker Bedarf zur Reinigung der Luft detektiert wurde und dass eine besondere Reinigung durchgeführt wird.

Bei einer weiteren Ausbildung sind die Anzeigedaten der ersten graphischen Darstellung ferner anhand der aktivierten Reinigungsstufe der Luftreinigungsvorrichtung erzeugbar. Dadurch kann die dargestellte Information besonders vorteilhaft an die aktuelle Reinigungsstufe angepasst werden.

Bei einer Weiterbildung umfassen die Anzeigedaten der erste graphische Darstellung ein Luftqualitätssymbol. Dem Nutzer werden die Informationen über das Reinigen der Luft so vorteilhafterweise als leicht erfassbares Symbol dargestellt.

In einer Ausbildung umfasst das Luftqualitätssymbol eine Wolke, wobei die Wolke Eigenschaften der Form, Größe, farblichen Gestaltung und/oder Bewegung aufweist. Dabei ist die graphische Darstellung so erzeugbar, dass die Eigenschaften der Wolke von der erfassten Luftqualität abhängig sind. Eine Wolke ist ein besonders vorteilhaftes Symbol für die gereinigte Luft, da sie dem Nutzer vertraut ist und mit Gasen, Dampf und Rauch in Verbindung gebracht wird. Sie eignet sich daher besonders gut zur Darstellung von die Luft betreffenden Zuständen und Prozessen.

Bei einer Weiterbildung der erfindungsgemäßen Vorrichtung weist die Wolke in Abhängigkeit von den Luftqualitätsdaten einen hohen Grad an Unordnung auf, wenn die Luftqualität schlecht ist, eine im Wesentlichen kugelförmige Gestalt, wenn die Luftqualität mittel ist, und eine torusförmige Gestalt, wenn die Luftqualität gut ist. Dabei ist ferner ein Auflösen der Wolke darstellbar, wenn die Luftqualität sehr gut ist.

Der Nutzer kann so vorteilhafterweise schnell und leicht erfassen, wie gut die Luftqualität ist. Insbesondere kann unter Verwendung verschiedener Formen und Grade von Unordnung der Wolke die Darstellung sehr einfach gestaltet werden, sodass die dargestellte Information sehr leicht erfassbar ist. Insbesondere kann durch die Darstellung einer sich auflösenden Wolke deutlich gemacht werden, dass die Luftqualität sehr gut und keine weitere Reinigung notwendig ist, da mit wolkenfreiem Himmel typischerweise klare, saubere Luft assoziiert wird, wie sie beim Reinigen der Luft erreicht werden soll.

Bei einer Ausbildung der Erfindung sind, wenn kein Reinigungsprogramm der Filtervorrichtung aktiviert ist oder nachdem ein Reinigungsprogramm abgeschlossen worden ist, Anzeigedaten einer zweiten graphischen Darstellung erzeugbar und ausgebbar. Das Display kann dadurch vorteilhafterweise zur Anzeige anderer Informationen genutzt werden, wenn es nicht zur Anzeige von Informationen über das Reinigen der Luft benötigt wird. Dies kann insbesondere auch dann der Fall sein, wenn eine kontinuierliche Luftreinigung im Hintergrund ausgeführt wird, über die der Nutzer nicht gesondert informiert werden soll.

Bei einer Weiterbildung umfasst die zweite graphische Darstellung eine Uhr. Das Display kann dadurch vorteilhafterweise zur Anzeige der Uhrzeit verwendet werden, wenn keine Daten zur Luftreinigung angezeigt werden. Da die Uhrzeit typischerweise keine dringliche Information ist, die dauerhaft sichtbar dargestellt werden muss, kann diese Anzeige bei Bedarf durch die Anzeige über das Reinigen der Luft ersetzt werden, ohne dass die störend empfunden würde.

Bei einer Ausgestaltung ist ferner durch eine Eingabevorrichtung eine Benutzereingabe erfassbar und die Steuersignale für die Filtervorrichtung und die Anzeigedaten sind ferner anhand der Benutzereingabe erzeugbar. Dadurch können die Anzeigedaten vorteilhafterweise auch Informationen über die Interaktion des Nutzers mit der Luftreinigung umfassen. Beispielsweise kann der Nutzer ein bestimmtes Reinigungsprogramm manuell auswählen oder die Luftreinigung manuell aktivieren oder deaktivieren. Ferner kann der Reinigungsvorgang angepasst werden, etwa durch Einstellen einer Intensität.

Bei einer Weiterbildung der Erfindung befindet sich der Innenraum in einem Kraftfahrzeug, in einem Raum eines Gebäudes oder in einem Aufzug. Die Erfindung lässt sich ferner nicht nur in Kraftfahrzeugen umsetzen, sondern es kommen alle Arten von Fahrzeugen mit einem Innenraum in Betracht. Die Erfindung kann auch in Räumen von Gebäuden umgesetzt werden, wie zum Beispiel Zimmern, Büros, Fahrstühlen. Dies erlaubt vorteilhafterweise die Anwendung der Erfindung auf unterschiedliche Bereiche, in denen die Luftqualität in insbesondere kleinen Innenräumen sichergestellt werden muss.

Bei dem erfindungsgemäße Verfahren wird zunächst die Luftqualität im Innenraum und in einem Außenraum erfasst. Anschließend werden anhand der erfassten Luftqualität Steuersignalen für eine Filtervorrichtung und ein Display erzeugt und es wird ein Reinigen von Luft durchgeführt. Gereinigte Luft wird in den Innenraum zugeführt und Informationen über das Reinigen der Luft werden ausgegeben.

Insbesondere ist die vorstehend beschriebene erfindungsgemäße Vorrichtung ausgebildet, das erfindungsgemäße Verfahren zu implementieren. Das Verfahren weist somit dieselben Vorteile auf wie die erfindungsgemäße Vorrichtung.

In einer Ausgestaltung umfassen die Steuersignale für das Display Anzeigedaten einer ersten graphischen Darstellung mit einem Luftqualitätssymbol. Dabei umfasst das Luftqualitätssymbol eine Wolke mit Eigenschaften der Form, Größe, farblichen Gestaltung und/oder Bewegung. Die graphische Darstellung ist so erzeugbar, dass die Eigenschaften der Wolke von der erfassten Luftqualität abhängig sind. Dem Nutzer können so die Luftqualität und Prozesse beim Reinigen der Luft bildlich und schnell erfassbar dargestellt werden.

Das erfindungsgemäße Kraftfahrzeug umfasst eine erfindungsgemäße Vorrichtung.

Die Erfindung wird nun anhand von Ausführungsbeispielen mit Bezug zu den Zeichnungen erläutert.
- Figur 1: zeigt ein Fahrzeug mit einem Ausführungsbeispiel der erfindungsgemäßen Vorrichtung in einem Fahrzeug,
- Figur 2: zeigt ein Ausführungsbeispiel eines Ausströmers mit einem Display gemäß der Erfindung und
- Figuren 3A bis 3F: zeigen ein Ausführungsbeispiel des erfindungsgemäßen Verfahrens sowie erfindungsgemäß erzeugte Anzeigen.

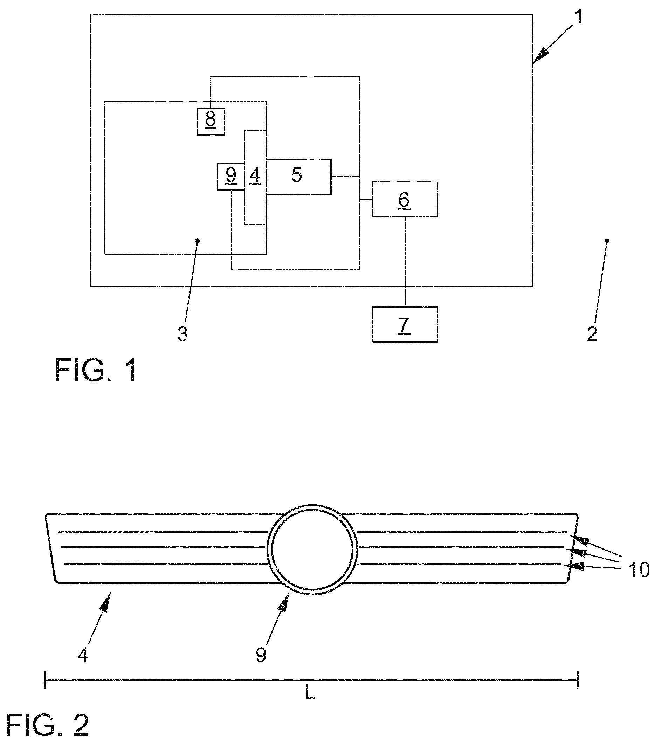

Mit Bezug zu Figur 1 wird ein Ausführungsbeispiel der erfindungsgemäßen Vorrichtung in einem Fahrzeug erläutert.

Ein Fahrzeug 1 umfasst einen Innenraum 3. Der Innenraum ist der Bereich, in dem sich die Passagiere des Fahrzeugs 1 befinden. Ferner ist ein Außenraum 2 definiert, der sich in der direkten Umgebung des Fahrzeugs 1 befindet. Insbesondere ist der Außenraum 2 der Raum um das Fahrzeug 1 herum, aus dem Luft in den Innenraum 3 angesaugt werden kann. Das Fahrzeug 1 umfasst ferner eine Innensensorik 8 und eine Außensensorik 7, mittels derer die Luftqualität im Innenraum 3 beziehungsweise im Außenraum 2 erfasst wird. Diese Messungen können auf an sich bekannte Weise erfolgen, beispielsweise durch Bestimmen der Konzentration von Partikeln definierter Größe in der Luft. Ferner kann die chemische Zusammensetzung der Luft, etwa der Sauerstoffgehalt oder der Kohlendioxidgehalt gemessen werden.

Die Innensensorik 8 und die Außensensorik 7 sind mit einer Steuerung 6 des Fahrzeugs 1 gekoppelt. Ferner umfasst das Fahrzeug 1 eine mit der Steuerung 6 gekoppelte Filtereinrichtung 5, die wiederum mit zumindest einem Ausströmer 4 gekoppelt ist. Der Ausströmer 4 ist so angeordnet, dass durch ihn Luft in den Innenraum 3 des Fahrzeugs 1 einströmen kann. Ferner umfasst das Fahrzeug 1 ein mit der Steuerung 6 gekoppeltes Display 9, das in direkter Umgebung des Ausströmers 4 angeordnet ist.

Die Filtereinrichtung 5 weist insbesondere mehrere Luftreinigungsfunktionen auf, bei denen die Luft auf verschiedene Weisen gereinigt wird. So wird etwa bei einer Luftreinigungsfunktion Luft aus dem Innenraum 3 angesaugt, gereinigt und in den Innenraum zurückgeleitet. Bei einer weiteren Luftreinigungsfunktion wird dagegen Luft aus dem Außenraum 2 angesaugt, gegebenenfalls gereinigt und in den Innenraum 3 geleitet. Ferner ist eine kontinuierliche Luftreinigungsfunktion vorgesehen, die ständig für eine Erhaltung der Luftqualität im Innenraum 3 sorgt, sowie eine besonders intensive Luftreinigungsfunktion, die zeitweise aktiviert werden kann, wenn die Luftqualität besonders schlecht ist und eine schnelle Reinigung notwendig ist.

In einem weiteren Ausführungsbeispiel kann dem Innenraum 3 Luft aus einem Vorratsbehälter zugeführt werden, insbesondere dann, wenn die Luft sowohl im Innenraum 3 als auch im Außenraum 4 so stark verschmutzt ist, dass die Filtervorrichtung 5 eine Reinigung der Luft nicht oder nur schwer oder langsam leisten könnte.

Mit Bezug zu Figur 2 wird ein Ausführungsbeispiel eines Ausströmers mit einem Display gemäß der Erfindung erläutert. Insbesondere handelt es sich hierbei um eine Detailansicht des in Figur 1 dargestellten Fahrzeugs 1.

Der Ausströmer 4 weist eine Längsausdehnung L auf. Ferner umfasst er innen angeordnete Lamellen 10. Durch den Ausströmer 4 kann Luft in den Innenraum 1 des Fahrzeugs 1 einströmen, insbesondere von der Filtervorrichtung 5 kommende Luft. In diesem Fall strömt die Luft teilweise um das Display 9 herum. Mittig ist das Display 9 angeordnet. Im dargestellten Fall ist das Display 9 rund, es kann jedoch in beliebigen anderen Formen ausgeführt sein.

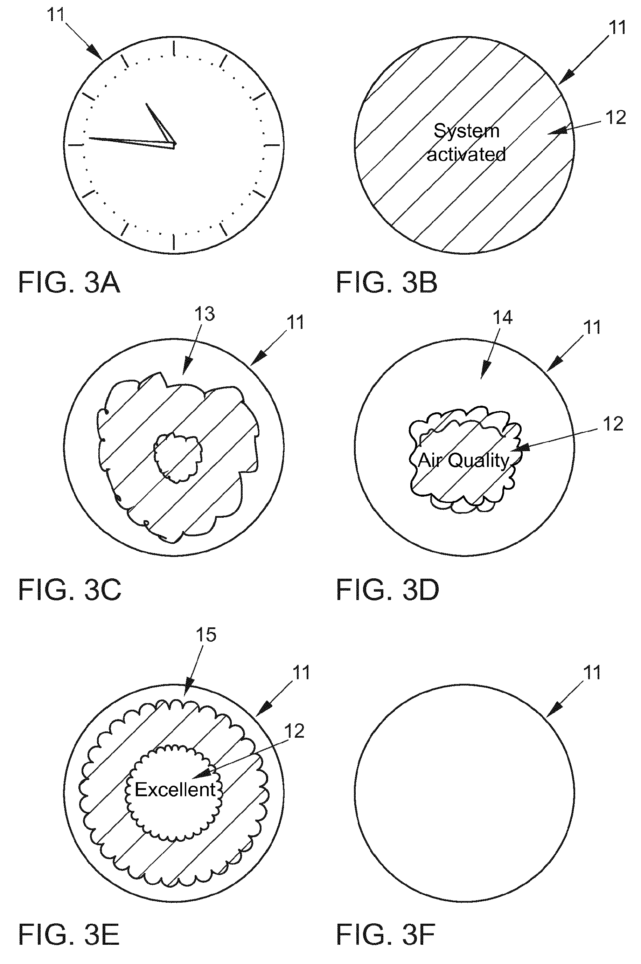

Mit Bezug zu den Figuren 3A bis 3F werden ein Ausführungsbeispiel des erfindungsgemäßen Verfahrens und erfindungsgemäß erzeugte Anzeigen erläutert. Die hier dargestellten Anzeigen werden von der oben mit Bezug zu den Figuren 1 und 2 erläuterten erfindungsgemäßen Vorrichtung erzeugt und auf dem Display 9 angezeigt.

In dem in Figur 3A dargestellten Fall ist keine Luftreinigungsfunktion aktiviert, beziehungsweise es kann eine kontinuierlich im Hintergrund laufende Luftreinigungsfunktion aktiviert sein. In diesem Fall kann eine auf dem Display 9 angezeigte graphische Darstellung 11 Informationen ausgeben, die nicht mit dem Reinigen der Luft in Verbindung stehen. Im dargestellten Fall wird eine Uhr angezeigt, zusätzlich oder alternativ können beliebige andere Inhalte angezeigt werden.

Wird eine Verschlechterung der Luftqualität im Innenraum 3 des Fahrzeugs 1 festgestellt, so wird die Filtervorrichtung 5 aktiviert und es strömt durch den Ausströmer 4 gereinigte Luft in den Innenraum 3. Das Aktivieren der Filtervorrichtung 5 wird durch eine graphische Anzeige 11 dargestellt, bei der die zuvor dargestellte Uhr verschwindet und eine Textmeldung 12 angezeigt wird. Zusätzlich kann im Hintergrund der graphischen Darstellung 11 eine statische oder dynamisch animierte Darstellung angezeigt werden, die eine Trübung oder schwebende Partikel signalisiert.

In einem weiteren Schritt wird die aktuelle Luftqualität im Innenraum 3 angezeigt, wobei Figur 3C eine Darstellung mit einer chaotischen Wolke 13 zeigt. Insbesondere kann die chaotische Wolke 13 grau dargestellt werden oder es können weitere Strukturierungen und/oder farbliche Eigenschaften gewählt werden, die eine Verschmutzung der Luft signalisieren.

Verbessert sich die Luftqualität durch das Reinigen der Luft, so wird in einem weiteren Schritt die in Figur 3D dargestellte graphische Darstellung 11 angezeigt. Die kugelförmige Wolke 14 ist hier kleiner und weist durch ihre runde Form einen höheren Grad an Ordnung auf als die in Figur 3C gezeigte graphische Darstellung 11. Die kugelförmige Wolke kann auch heller und/oder durchscheinender dargestellt werden als die in Figur 3C gezeigte chaotische Wolke 13. Ferner kann die Darstellung auf verschiedene andere Weisen so modifiziert werden, dass sie einen höheren Grad an Sauberkeit der Luft signalisiert als die in Figur 3C gezeigte graphische Darstellung 11.

Wird eine sehr hohe Luftqualität erreicht, so kann dies durch eine graphische Darstellung 11 wie in Figur 3E gezeigt signalisiert werden. In diesem Fall wird eine torusförmige Wolke 15 dargestellt, die durch ihre Form einen hohen Grad an Ordnung aufweist und die Auflösung oder das Verschwinden der zuvor dargestellten Verunreinigungen in der Luft signalisiert. Ferner kann dabei eine Textmitteilung 12 dargestellt werden.

Bei Erreichen der maximal erreichbaren beziehungsweise der gewünschten Luftqualität wird, wie in Figur 3F dargestellt, durch Auflösen der zuvor dargestellten Wolkendarstellungen das Verschwinden der Verunreinigungen signalisiert. Wird dieser Zustand erreicht, so kann die Filtervorrichtung 5 deaktiviert werden und die graphische Darstellung 11 kann wieder wie in Figur 3A gezeigt erfolgen. Es kann auch eine kontinuierliche Luftreinigungsfunktion aktiviert werden, die im Hintergrund abläuft und dem Nutzer nicht ständig angezeigt wird.

Die in den Figuren 3A bis 3F dargestellten Anzeigen können statisch sein oder dynamisch als Animation ablaufen. Die gezeigten Darstellungen sind ferner beispielhaft zu verstehen und bedeuten keine Einschränkung auf eine bildliche Darstellung. Es können auch andere Symbole verwendet werden, beispielsweise einfache geometrische Formen, die verschiedene Grade der Verschmutzung der Luft im Innenraum 3 symbolisieren. Ferner können beliebige alphanumerische Angaben angezeigte werden, um den Nutzer bei der Interpretation der Anzeige zu unterstützen.

Bei einer Ausführungsform werden die in den Figuren 3B bis 3F gezeigten graphischen Darstellungen 11 nur dann angezeigt, wenn eine besonders intensive Luftreinigungsfunktion aktiviert ist.

In einer weiteren Ausführungsform umfasst das Fahrzeug 1 ferner eine Eingabevorrichtung. Mittels dieser kann der Nutzer durch eine Eingabe die Filtervorrichtung manuell aktivieren, etwa wenn er das Gefühl hat, dass eine Luftreinigung vorgenommen werden sollte. In diesem Fall können die in den Figuren 3B bis 3F dargestellten graphischen Darstellungen 11 entsprechend angezeigt werden. Ferner kann diese Eingabevorrichtung es dem Nutzer ermöglichen, einen Luftreinigungsprozess abzubrechen oder eine Luftreinigungsfunktion auszuwählen.

Die graphische Darstellung 11 kann ferner von der jeweils aktivierten Luftreinigungsfunktion abhängen. Beispielsweise können verschiedene Darstellungen erzeugt werden, abhängig davon, ob etwa eine besonders intensive Reinigung oder eine schwächere Luftreinigung vorgenommen wird.

### Bezugszeichenliste

- 1: Fahrzeug
- 2: Außenraum
- 3: Innenraum
- 4: Ausströmer
- 5: Filtervorrichtung
- 6: Steuerung
- 7: Außensensorik
- 8: Innensensorik
- 9: Display
- 10: Lamellen
- 11: Graphische Darstellung
- 12: Textmeldung
- 13: Chaotische Wolke
- 14: Kugelförmige Wolke
- 15: Torusförmige Wolke
- L: Längsausdehnung

## Patentansprüche

1. Vorrichtung zur Erhaltung und Verbesserung der Luftqualität in einem Innenraum (3) mit
einer Sensorik (7, 8) zum Erfassen der Luftqualität im Innenraum (3) und in einem Außenraum (2);
einer Filtervorrichtung (5) zum Reinigen von Luft;
zumindest einem Ausströmer (4) zum Zuführen gereinigter Luft in den Innenraum (2);
einem Steuergerät (6), durch das anhand der Signale der Sensorik (7, 8) Steuersignale für die Filtervorrichtung (5) erzeugbar sind und Anzeigedaten einer ersten graphischen Darstellung erzeugbar sind; und
einem freiprogrammierbaren Display (9), durch das die Anzeigedaten anzeigbar sind;
**dadurch gekennzeichnet, dass**
das Display (9) im Bereich des Ausströmers (4) angeordnet ist und
die Anzeigedaten Informationen über das Reinigen der Luft umfassen.

2. Vorrichtung nach Anspruch 1,
**dadurch gekennzeichnet, dass**
das Display (9) in räumlicher Nähe zu dem zumindest einen Ausströmer (4) angeordnet ist.

3. Vorrichtung nach Anspruch 2,
**dadurch gekennzeichnet, dass**
der Ausströmer (4) eine Längsausdehnung (L) aufweist und das Display (9) relativ zu der Längsausdehnung (L) mittig angeordnet ist.

4. Vorrichtung nach einem der vorhergehenden Ansprüche,
**dadurch gekennzeichnet, dass**
die Filtervorrichtung (5) zumindest zwei Reinigungsprogramme zum Reinigen der Luft aufweist, die in Abhängigkeit von der erfassten Luftqualität eines der Reinigungsprogramme aktivierbar sind, und
die Anzeigedaten der ersten graphischen Darstellung angezeigt werden, wenn ein bestimmtes Reinigungsprogramm aktiviert ist.

5. Vorrichtung nach Anspruch 4,
**dadurch gekennzeichnet, dass**
die Anzeigedaten der ersten graphischen Darstellung ferner anhand der aktivierten Reinigungsstufe der Luftreinigungsvorrichtung (5) erzeugbar sind.

6. Vorrichtung nach einem der vorhergehenden Ansprüche,
**dadurch gekennzeichnet, dass**
die Anzeigedaten der erste graphische Darstellung ein Luftqualitätssymbol umfassen.

7. Vorrichtung nach Anspruch 6,
**dadurch gekennzeichnet, dass**
das Luftqualitätssymbol eine Wolke (13, 14, 15) umfasst, wobei die Wolke (13, 14, 15) Eigenschaften der Form, Größe, farblichen Gestaltung und/oder Bewegung aufweist, wobei die graphische Darstellung so erzeugbar ist, dass die Eigenschaften der Wolke (13, 14, 15) von der erfassten Luftqualität abhängig sind.

8. Vorrichtung nach Anspruch 7,
**dadurch gekennzeichnet, dass**
die Wolke (13, 14, 15) in Abhängigkeit von den Luftqualitätsdaten
- einen hohen Grad an Unordnung (13) aufweist, wenn die Luftqualität schlecht ist,
- eine im Wesentlichen kugelförmige Gestalt (14) aufweist, wenn die Luftqualität mittel ist, und
- eine torusförmige Gestalt (15) aufweist, wenn die Luftqualität gut ist;
- wobei ein Auflösen der Wolke darstellbar ist, wenn die Luftqualität sehr gut ist.

9. Vorrichtung nach einem der vorhergehenden Ansprüche,
**dadurch gekennzeichnet, dass,**
wenn kein Reinigungsprogramm der Filtervorrichtung (5) aktiviert ist oder nachdem ein Reinigungsprogramm abgeschlossen worden ist, Anzeigedaten einer zweiten graphischen Darstellung erzeugbar und ausgebbar sind.

10. Vorrichtung nach Anspruch 9,
**dadurch gekennzeichnet, dass**
die zweite graphische Darstellung eine Uhr umfasst.

11. Vorrichtung nach einem der vorhergehenden Ansprüche,
**dadurch gekennzeichnet, dass**
ferner durch eine Eingabevorrichtung eine Benutzereingabe erfassbar ist und die Steuersignale für die Filtervorrichtung (5) und die Anzeigedaten ferner anhand der Benutzereingabe erzeugbar sind.

12. Vorrichtung nach einem der vorhergehenden Ansprüche,
**dadurch gekennzeichnet, dass**
sich der Innenraum (3) in einem Kraftfahrzeug (1), in einem Raum eines Gebäudes oder in einem Aufzug befindet.

13. Verfahren zur Erhaltung und Verbesserung der Luftqualität in einem Innenraum (3), umfassend die folgenden Schritte:
Erfassen der Luftqualität im Innenraum (3) und in einem Außenraum (2);
Erzeugen von Steuersignalen für eine Filtervorrichtung (5) und ein Display (9) anhand der erfassten Luftqualität;
Reinigen von Luft;
Zuführen gereinigter Luft in den Innenraum (3); und
Ausgeben von Informationen über das Reinigen der Luft.

14. Verfahren nach Anspruch 13,
**dadurch gekennzeichnet, dass**
die Steuersignale für das Display (9) Anzeigedaten einer ersten graphischen Darstellung mit einem Luftqualitätssymbol umfassen, wobei das Luftqualitätssymbol eine Wolke (13, 14, 15) mit Eigenschaften der Form, Größe, farblichen Gestaltung und/oder Bewegung umfasst, wobei die graphische Darstellung so erzeugbar ist, dass die Eigenschaften der Wolke (13, 14, 15) von der erfassten Luftqualität abhängig sind.

15. Kraftfahrzeug (1) mit einer Vorrichtung nach einem der Ansprüche 1 bis 12.
